# EUROPEAN PATENT APPLICATION

(11) **EP 4 835 822 A1**
(43) Date of publication of application: **04.11.2026**
(21) Application number: 26175926.0
(22) Date of filing: 30.04.2026
(51) Int. Cl.: G06T 9/00, G06N 3/045, H04N 19/90

(54) **IMAGE COMPRESSION SYSTEM AND METHOD**

(30) Priority: 30.04.2025 GB 202506592
(71) Applicant: Sony Interactive Entertainment Inc., Tokyo 108-0075 (JP)
(72) Inventor: CERRATO, Maurizio, London, W1F 7LP (GB); LEUNG, Jun Yen, London, W1F 7LP (GB); GREEN, Lawrence Martin, London, W1F 7LP (GB); MONTI, Maria Chiara, London, W1F 7LP (GB); CONNOR, Patrick John, London, W1F 7LP (GB); GUPTA, Rajeev, London, W1F 7LP (GB)
(74) Representative: Fish & Richardson P.C.

(57) **Abstract**

A method of representing a current block of pixels comprises the steps of obtaining one or more 'endpoint' colours for the current block of pixels, selecting data indicative of a decoder artificial neural network 'ANN' used to indicate pattern data for the current block of pixels as respective proportions for two or more colours including the or each obtained endpoint colour, and representing the current block of pixels with a combination of the or each endpoint colour and the selected data indicative of the used decoder ANN; meanwhile a method of obtaining pixel colours for an encoded block of pixels comprises the steps of obtaining a representation of current block of pixels encoded as a combination of one or more endpoint colours and selected data indicative of a particular decoder ANN, wherein the particular decoder ANN was trained to output blending proportion data indicating respective colours of the current block of pixels as a proportionate blend of colours comprising at least the or each endpoint colour, obtaining the particular decoder ANN responsive to the selected data, and using the particular decoder ANN and at least the or each endpoint colour to generate the respective colours of the current block of pixels.

## Description

### BACKGROUND OF THE INVENTION

### Field of the invention

The present invention relates to a compression system and method.

### Description of the Prior Art

Image compression processes vary widely in their approach. One subset of these relates to texture compression used to reduce the memory footprint of textures for videogames. Techniques for texture compression typically emphasise a low computational overhead for decompression, so that accessing the textures at the point of need incurs minimal delay.

However, this can also mean that the original compression process itself becomes more complex, or requires a compromise to image quality when decoded again.

The present invention seeks to mitigate or alleviate this problem.

### SUMMARY OF THE INVENTION

Various aspects and features of the present invention are defined in the appended claims and within the text of the accompanying description.
In a first aspect, a method of representing a current block of pixels is provided in accordance with claim 1.
In another aspect, a method of obtaining pixel colours for an encoded block of pixels is provided in accordance with claim 14.
In another aspect, an encoder device is provided in accordance with claim 16.
In another aspect, a decoder device is provided in accordance with claim 17.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an entertainment device, operable as an encoder device and/or a decoder device in accordance with embodiments of the present description.
- Figure 2 is a schematic diagram of the bit allocations of a known pixel compression scheme 'BC1'.
- Figure 3 is a schematic diagram of a decoder artificial neural network in accordance with embodiments of the present description.
- Figure 4 is a schematic diagram of encoder and decoder artificial neural networks in accordance with embodiments of the present description.
- Figure 5 is a schematic diagram of an encoder and plural decoder artificial neural networks in accordance with embodiments of the present description.
- Figure 6 is a flow diagram of a method of representing a current block of pixels in accordance with embodiments of the present description.
- Figure 7 is a flow diagram of a method of obtaining pixel colours for an encoded block of pixels in accordance with embodiments of the present description.

### DESCRIPTION OF THE EMBODIMENTS

A compression system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

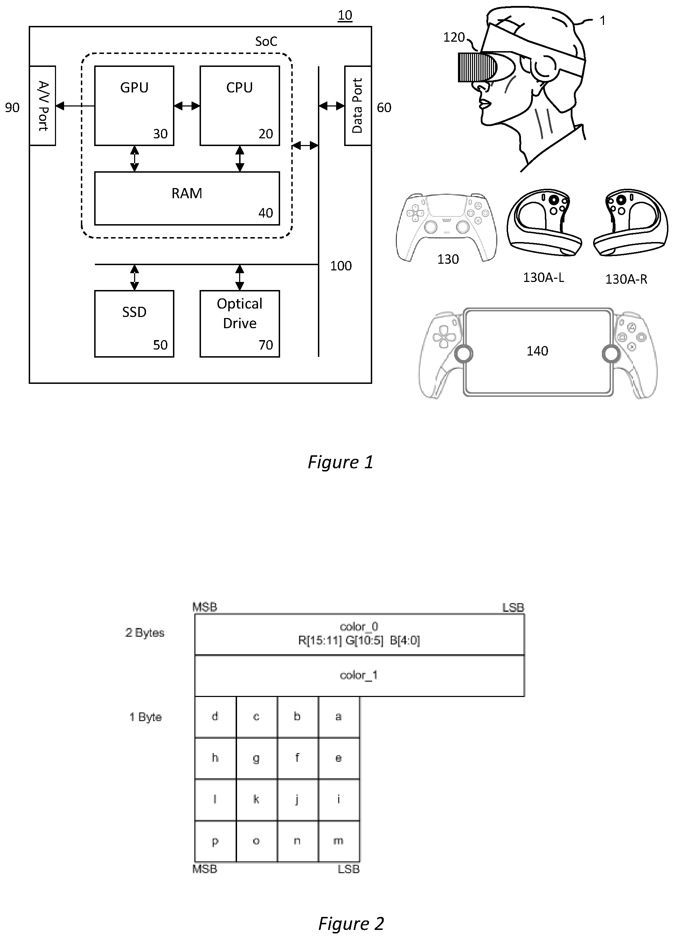

Referring now to the drawings, wherein like reference numerals designate identical or corresponding parts throughout the several views, Figure 1 shows an example of an entertainment system 10, such as a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC). Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70. Audio/visual outputs from the entertainment device are typically provided through one or more A/V ports 90 or one or more of the data ports 60. Where components are not integrated, they may be connected as appropriate either by a dedicated data link or via a bus 100.

Examples of a device for displaying images output by the entertainment system include a head mounted display 'HMD' 120 worn by a user 1, a TV (not shown), and a portable screen 140.

Interaction with the system is typically provided using one or more handheld controllers 130, 140, and/or one or more VR controllers (130A-L,R) in the case of the HMD.

### Texture compression

Referring now to Figure 2, a common texture compression scheme is S3 texture compression, which has a number of similar variants. A common example is known as DXTC. Whilst DTXC is referred to herein for the purposes of explanation, it will be appreciated that the techniques disclosed herein apply to any suitable compression technique.

The smallest (most compact) version of DTXC is DXT1, also known as block compression 1 or BC1. This is capable of storing 16 pixels of colour data in 64 bits using a simple lossy compression scheme.

In this scheme, a 4x4 block of pixels is encoded by selecting two so-called endpoint colours referred to as 'Color0' and 'Color1' (defined using 16 bits each), and 16 two-bit indicators of how these two colours should be mixed to approximate the original colour for each respective pixel.

Two bits allows for four possible choices to be encoded. For example:

| | |
|---|---|
| 00: | Color0 |
| 01: | 25% Color0 75% Color1 |
| 10: | 75% Color0 25% Color1 |
| 11: | Color1 |

Hence the 16 pixels in the 4x4 block are limited to selecting one of four colours, based on the two endpoint colours that are associated with the block and the available interpolation options.

To achieve a good result (i.e. a decoded set of pixels that look perceptually similar to the original pixels once decompressed) with such a limited palette, it is important to choose two endpoint colours that preferably minimise the pixel colour errors when the appropriate interpolations are chosen from the above four options. The minimisation may be based on overall (sum) error for the 16 pixels, or may be based on avoiding a maximum error for any individual pixel, or a (optionally weighted) combination of the two.

For low-frequency regions of a texture (e.g. comprising a gradual colour change), selection of the two endpoint colours may be relatively straightforward to achieve if the pixels in the block transition relatively evenly from one to the other.

However, for higher spatial frequency regions (e.g. where there are edges or rapidly changing patterns) it can be much harder to identify two endpoint colours that minimise, or at least reduce to an acceptable level, perceptual differences between the original pixels and the pixel block when it is decompressed. This problem becomes even harder if consideration is also given to colour continuity between blocks in the overall texture.

Consequently BC1 encoding can be a slow process for detailed textures as each 4x4 set of pixels is evaluated to find the best pair of endpoint colours, but even then also provides relatively poor results due to having low colour expressiveness from ony four possible weight combinations.

Accordingly, in embodiments of the present description, an alternative implementation for BC1 is proposed.

### ANN compression

In embodiments of the present description, the 4x4 pixel x 2 bit array of interpolation selections is replaced with a neural network (or 'ANN'), trained to infer interpolations values for the 16 pixels of the block.

In embodiments of the present description, the ANN is a small, per 4x4 block, multilevel perceptron (though it is not limited to a multilevel perceptron, and any suitable ANN scheme may be used).

The ANN may be arranged and trained on one of several ways.

In one instance, the ANN is trained to take as input an index, or coordinate, of a pixel in the block and output one (or two) values corresponding to the interpolation weight(s) for the endpoint colours for that pixel in that block.

Notably, this means that the output is not limited to just four options but can learn to output different colour blends for different pixels, thereby improving the quality of the compressed image.

The output can be a single node/value corresponding to the proportion of one colour, since a value for the complementary proportion of the other colour would be redundant.

However, optionally one or more additional values could be considered, that are based on a default one or more additional colours that don't need to be included as endpoint colours for the specific pixel block. The or each colour may be global, such as red, green, and/or blue. Alternatively they may be specific to the texture as a whole from which the current block is being encoded - in this case it may be an average brown, lilac, orange, or whatever is the base/mean colour of the texture. The or each default base colour could be used for training the ANN(s), but only needs to be associated with the texture once, and not per BC1 sized block.

In this way, the ANN can synthesise a colour for a pixel from a combination of three or more colours, only two of which are specific to the encoded block. Optionally, the contribution from one or more of the additional base colours could be assumed and so does not need to be represented in the per-pixel bit representations. In this way for example the endpoint colours could instead define how pixels vary from an average base colour for the texture, rather than having to define a complete colour themselves.

It will also be appreciated that in principle it could similarly mean that only one endpoint colour is specified in a block, for use in combination with one or more default colours; however this is likely to impact the quality of the decoded image since none or the or each other colour is specific to the current block.

In all cases, whether based only on block specific endpoint colours, or also incorporating one or more fixed base colours (whether global or texture specific), the target output(s) of the ANN will correspond to a value or values that indicate a respective proportion of one or more endpoint colours, the proportion(s) being those that when used to blend the endpoint and optionally other colour(s) accordingly, result in the closest match to the actual colour of the respective pixel, or a match to within a predetermined tolerance. As noted previously, the proportion for one endpoint or other colour need not be explicitly trained for as it will be the complement of the other(s) so that together they add up to 1 (or in percentage terms, up to 100%).

As noted previously, BC1 is a particularly compact compression scheme.

### Compact ANN representation

To provide an ANN of comparable size to the BC1 weight table would require defining it using 32bits. If one were to assume 4-bit number representation, this would allow for 8 weights in the ANN. Depending on the form of the ANN, this may be 8 weights and biases combined, or biases may be fixed, or biases may not exist.

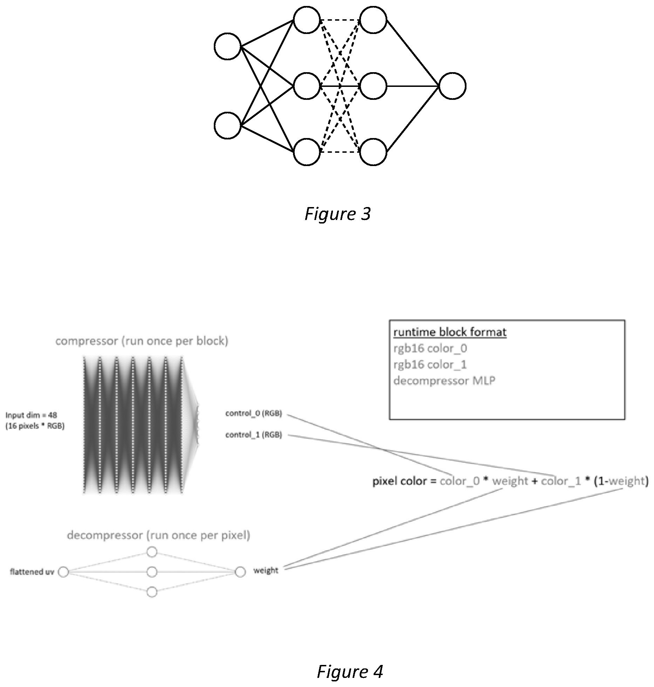

Referring now to Figure 3, in one instance such an ANN may be achieved using fixed weights (denoted by solid lines) on the input and output layer, and (in this example) 8 out of 9 weights in the hidden layer being trainable (denoted by dashed lines). Then, only the 8 trained weights need to be provided for the corresponding 4x4 pixel block, and are inserted into the larger fixed network for decoding.

It will be appreciated however that whilst such an ANN would work, it would be relatively crude.

In another instance, an improvement would be for the fixed weights to be previously determined by training a parent copy of the ANN on at least a representative portion of the texture as a whole, so that when fixed, the weights are relevant to the general colour scheme of the texture. The remaining trainable weights are then trained on target outputs for the specific 4x4 pixel texture block and endpoint colours. This makes it possible to better capture the relevant pixel data using the trainable weights available.

In a further instance, a further improvement could be achieved by first identifying blocks of with similar pattern distributions (e.g. sort by mutual similarly), and selecting either 4, 8, or 16 sets of blocks.

With these, then either 4, 8, or 16 parent ANNs could each be trained on a respective set, to learn weights for the input and output layer that are more specific to that pattern distribution and hence provide an overall better output for similar blocks. For the example of 16 parent ANNs, these can be indexed using 4 bits - so either this could be an extra 4 bit overhead for the scheme, or an additional one of the middle layer weights could be fixed, freeing up 4 bits for this purpose. Clearly also any subsequently fixed weights in the hidden layer could also be trained during this process.

Alternatively, for either example of the ANN in Figure 3, given the 4-bit nature of the ANN, potentially endpoint colours could be reduced to 14 bits and the resulting 4 bits spare bits could be used for the index so that (the) one of the fixed weights on the hidden layer need not be fixed.

Then the best matching one of the 16 fixed ANNs for the pattern in a given 4x4 pixel block of the texture could be used to train the 8 trainable weights of a copy of that matching ANN, providing a better output at decoding for that 4x4 block. The fixed weights of the respective ANNs would be a relatively small overhead for the texture as a whole.

It will be appreciated that the pattern distribution referred to above is generally independent of colour - for example being an equivalent greyscale or a luminance pattern. The colour is represented by the endpoint colours and any global colours.

Hence more generally, to a first approximation the 8x4 bit texture block-specific weights of a compact ANN may occupy substantially the same amount of space as the 4x4x2bit indices of the BC1 scheme, with any other weights of the ANN being fixed. These fixed weights may either be global, specific to the texture, or specific to a subset of similar blocks in the texture, and selected using an index (e.g. of 8 or 16 possible sets of fixed weights).

The description above assumes that the block-specific weights provided for the ANN are complete values for those weights (i.e. the 4 bits define the weight value directly).

However, it may be preferable for example to use 8 bit values for ANN weights, or indeed 12 bit or 16 bit values, which tend to produce better performing ANNs. In this case, the 4 bits stored for each block specific weight of the ANN may be a predetermined 4 bits within an 8, 12, or 16 bit value derived during training. In this way, a parent ANN may be trained globally, per texture, or per similar texture block as set as described previously but with more precise values. Once done, the same weights as before may be fixed, and a copy of the (relevant) parent ANN is trained on a specific block - but now the newly trained/updated values within the hidden layer are approximated using one of 16 values available using those 4 bits.

Hence for example for a given 16 bit initial weight value 48,239 in a parent ANN, once the copy is trained on a specific block the updated value for that weight may be 54,033.

In binary (16 bits) these are:
48,239 = 1011110001101111
54,033 = 1101001100010001

In this case, it may make sense to encode the 2-5^{th} most significant bits, assuming here that the most significant bit will remain the same for an ANN with other weights trained for similar textures.

In this case, the possible value range for the 4 bit approximation of the parent 16 bit weight is then:
33,903 = 1000010001101111
35,951 = 1000110001101111
37,999 = 1001010001101111
etc., ie. In 16 increments of 2¹¹=2048, up to:
64,623 = 1111110001101111

In this case, the actual value of 54,033 will be represented by
54,383 = 1101010001101111
i.e. to within an error of just 0.65%. The maximum error within this range would be 1.56% (±1,024 out of 65,535).

Optionally, to identify the best 4 bits to select (which need not be contiguous), the block specific ANNs for all the pixel blocks in a similar set or texture can be trained, and then the range of resulting values for each trainable weight across these ANNs can be evaluated (either the full range, or 1 standard deviation or 1.5, or 2, i.e. to capture the majority of differences). Then the 4 bits that best capture this range within the 16 bits (or 12 or 8 as appropriate) of the parent ANN weights can then be chosen to represent that weight in the encoding.

In this way in embodiments of the present description 16 bit (or other bit depth) weights can be used for a parent ANN, and then in pixel block specific child ANNs some of those weights are fixed (as before), with the others being trained and the resulting difference with respect to the parent values effectively being quantised within a targeted range of the 16 bit values expressible with a selection of 4 bits (or any other selected number of bits) deviating from the trained parent ANN.

### ANN architecture

Next, it will be appreciated that the ANN in Figure 3 is exemplary only.

In particular, there is no need for the ANN to only have one hidden layer; for example, the ANN may have one or more additional hidden layers on one or both sides of the hidden layer shown.

Similarly, there is no need for a hidden layer containing block-specific trainable weights to only have those trainable weights - as noted above in the example of Figure 3, potentially only 7 or 8 out of the 9 weights in the hidden layer are trainable for a specific pixel block. However, that hidden layer may comprise many more nodes (for example 8 nodes on the left hand side to three on the right, resulting in 24 weights). In this case only a relatively small subset of the weights will be adjustable from those of the parent (e.g. 7 or 8 out of 24). These may be distributed in any suitable manner, e.g. having one of the three right hand nodes connected by a trainable weight to each of the eight left hand nodes, or by having most or all of the weights between two or three of the left hand nodes and the three right hand nodes be fully trainable. The specific constellation of trainable weights may vary depending on the overall architecture of the ANN(s). Similarly, trainable weights need to be restricted to just one layer, or one particular layer, of the ANN but may be selected for example based on empirical performance.

Hence more generally the ANN(s) may have any suitable architecture, and this is not limited by the size of the pixel block encoding; rather the number of weights that can be updated in response to a specific pixel block may be limited by the size of the pixel block encoding, but these further trainable weights may be distributed within the ANN in any suitable manner.

Furthermore, it will be appreciated that whilst the description herein has referred to 4 bit representations of the weights, it need not be limited to this.

For example rather than 8 x 4 bit weights or 4 bit 'quantisations', the scheme may use 16 x 2 bit weights or 2 bit 'quantisations' for the same encoded footprint. This trade-off in eventual texture quality between the number of trainable weights and the degree of approximation of the weight values, even if mitigated by the quantisation scheme above, can be assessed empirically.

Meanwhile if it is acceptable for the compressed data to be slightly larger in return for improved image quality, then 5, 6, or more bits may be used for the weights or quantisations.

If 8 x 5-bit weights were used, then each 4x4 pixel encoding would increase from 64 bits to 72 bits (i.e. an extra 8 bits). Similarly if 8 x 6-bit weights were used then each 4x4 pixel encoding would increase from 64 bits to 80 bits (i.e. an extra 16 bits). For comparison, the uncompressed set of 4x4 pixels would normally occupy 256 bits.

Similarly, it will be appreciated that the scheme need not be limited to the 4x4 pixel blocks of BC1.

In one instance, an ANN could be trained on a larger texture region. This could be selected for example based on the variability of the texture, so that larger blocks comprising smooth colours or gentle gradients could be trained using an ANN designed for larger blocks (e.g. trained with a larger set of input coordinates and corresponding outputs). The number of block specific trainable weights could be the same as before (so that the ANN represents a relative encoding saving) or may comprise more such weights, but optionally not scaling up at the same rate as the block area, again representing a relative saving.

The scheme could then employ different ANNs for different block types (large blocks for low spatial frequencies, and smaller blocks - e.g. 4x4 - for higher spatial frequencies).

### Colour space representation

It will be appreciated that whilst a pixel colour may be represented by a value within the red, green, and blue space, it is not necessary for all of these colours to be assigned a similar number of bits within the palette, particularly if the overall colour scheme does not comprise for example much green.

Similarly the pixel colour may be represented by or converted to a different colour scheme, for example based on luminance and chrominance. In this case again fewer bits may be necessary for luminance than for chrominance.

In either case, the output from the ANN may be a single node representing the (example) proportion of one single 16 bit endpoint colour representation, or it may have multiple output nodes representing different aspects of the colour space; hence for example it may comprise three (R,G,B) nodes or two (luminance, chrominance) nodes, or nodes for any other colour representation, that express the relative proportion of one end point colour in that respective aspect.

### Training and Endpoint colour selection

In the BC1 scheme, the endpoint colour selection was based on the assumption that the only possible resulting colours were one of four possible mixes of these two endpoint colours.

With the use of an ANN to output mix values, this assumption is no longer correct.

Hence in one embodiment, an ANN may first be trained using the same colour endpoints that would be selected for the BC1 scheme. Once trained, these endpoint colours could be varied to detect if a better approximation of the pixel block is achieved. If so, then the ANN is updated to take advantage of this, and then the endpoint colours are varied again. If a better approximation is found, the process repeats, and so the system steps incrementally toward a better pair of endpoint colours. These endpoint colours could then be used as the initial colour selection for iterating another pixel block (e.g. the neighbouring block, or blocks with less than a threshold sum absolute difference in pixel colours, optionally independent of pixel positions). Whilst possible to use, this iterative approach requires multiple training cycles.

In another embodiment, such a scheme is effectively implemented by a companion ANN (e.g. a recurrent ANN) that is trained by receiving two endpoint colours and a measure of image error resulting therefrom, and outputs a modified pair of endpoint colours. This companion ANN is then trained to find the endpoint colours that minimise the image error. This companion ANN can run in tandem with the ANN generating the mix values for the pixels (for example once this ANN is approaching convergence and is able to adequately perform the task) so that both ANNs converge on respective parts of the solution, with one exploring the endpoint colour space as the other adapts to it when generating mix values.

The companion ANN, in a similar way to the compression ANNs, can comprise a set of ANNs initially trained on respective endpoint colours - hence for example there may be a companion ANN for each parent ANN in the schemes herein (for example for each set of similar pixel blocks in a texture or game).

Hence more generally, an 'encoder' companion ANN for selecting endpoint colours is trained at the same time as the 'decoder' ANN that generates the proportions of those colours to approximate the colour of a respective pixel. Both are trained with the same loss function: the absolute difference between the colour indicated by endpoint colours of the encoder ANN mixed according to the proportions output by the decoder ANN, and the actual ground truth colour of the respective pixel. In this way, both ANNs converge on a solution for the pixel block.

Once training is complete (e.g. when the loss function reaches a threshold value, or stops reducing) the endpoint colour(s) generated by the encoder ANN are kept, whilst the encoder ANN itself can be discarded. The endpoint colours are then saved with the decoder ANN weight data as described previously herein.

Referring now to Figure 4, as an example the encoder or compressor companion ANN may take the original block of pixels (e.g. 16 pixels x 3 colour channels R,G,B to result in 48 inputs, or alternatively a chrominance and luminance representation), and output two endpoint colours, for example as 2 x 3 colour channels, referred to as control_0 (i.e. endpoint colour_0) and control_1 (i.e. endpoint colour_1). The compressor is not transmitted or included as part of the image representation, and indeed optionally may not be used again.

Instead the decompressor, which in one form or another is represented within the encoding of the block of pixels as described elsewhere herein, takes a respective position (e.g. a value such as from 1 to 16, or a two dimensional input such as 1...4, 1..4), and outputs at least a first weight or proportion for one of the endpoint colours. As noted elsewhere herein, the decompressor typically outputs one fewer proportion values than there are endpoint colours, as the last unspecified value is a complement of the others combined.

It will be appreciated that the decompressor in Figure 4 is very simple, but as discussed elsewhere herein the decompressor can be a larger ANN with just a subset of weights specified and/or one of a suite of ANNs identified by an index, within the encoding of the block of pixels.In relation to indexed ANNs, and as described in relation to variant embodiments elsewhere herein, instead of having one decoder ANN for example block of pixels, one may have a predetermined suite of for example 8, 16, 32, or 64 such decoders, which as noted elsewhere may be respectively trained on a subset of similar pixel blocks in a similar manner to the that above. Then subsequently, for a current specific pixel block an encoder is trained in conjunction with one of the trained decoders (e.g. one trained on a subset of pixel blocks most similar to the current specific pixel block) to derive the endpoint colour(s) for that current specific pixel block. Then the endpoint colours are then saved, but this time only with an index to the respective decoder, rather than decoder weight data. Hence for 8, 16, 32, or 64 decoders, only 3, 4, 5, or 6 additional bits are needed on top of the 32 for the endpoint colours.

The above approaches assume a one-to-one relationship between encoder / compressor and decoder / decompressor.

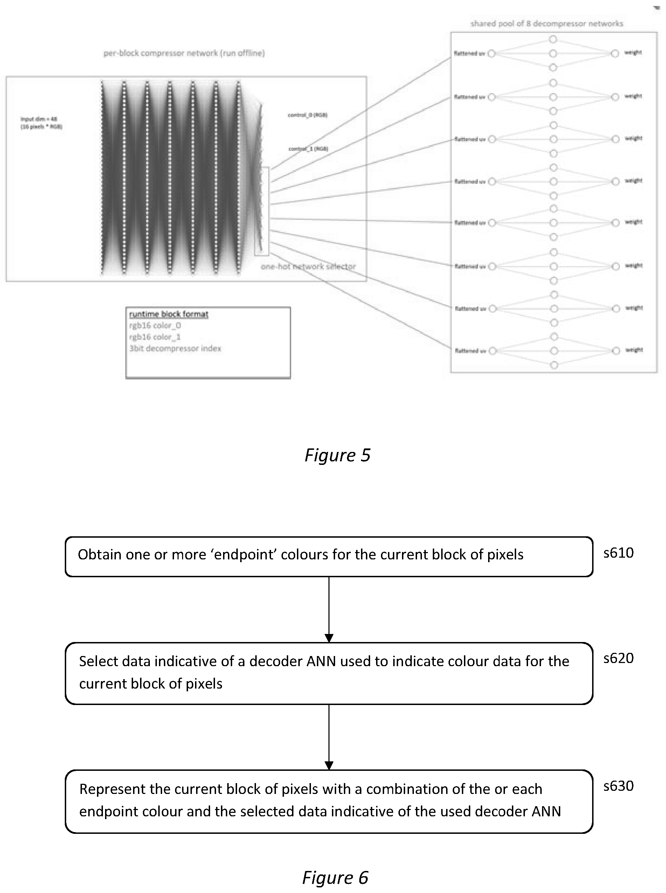

However, referring now to Figure 5, again the encoder / compressor is trained together with the decoder / decompressor to find a good set of endpoint colours. Again, it is not required to train a decompressor per pixel block, but instead uses a predetermined suite of decompressors that each embody different structural pattern information.

In this case, the compressor learns not just which endpoint colour(s) to output for a given pixel block, but also identifies which one of the predetermined suite of decompressors to use to represent the structural pattern aspect of the block of pixels.

Hence whilst in the previous example an encoder was trained for each particular pixel block and/or predetermined ANN, in this example one encoder is trained for the entire texture (or indeed for multiple textures, or for a global approach), and also learns to select the best decoder for the structural pattern of the current block of pixels. The suite of decoders, meanwhile, can either have been wholly or partially trained previously using any of the techniques herein, or are partially or wholly trained in parallel with the compressor.

### Variant embodiments

The description herein has assumed that an ANN or child ANN is trained for each pixel block. As a result each pixel block occupied 64 bits, similar to BC1; 2x16-bit endpoint colours, and 8x4-bit ANN data.

However, in a variant embodiment, a set of N ANNs (for example 8, 16, 32, or 62), typically architecturally identical as elsewhere herein, are trained, either on all textures in a game (for a global solution) or for similar texture blocks within a texture (for a per-texture solution).

Then optionally each pixel block in a texture is subjected to a test encoding and decoding using each ANN to determine which one performs best in terms of the perceptual accuracy of the resulting decoded pixel block. It will be appreciated that in the case of ANNs respectively trained on sets of similar blocks this step may not be needed, and instead the ANN trains on a set of blocks most similar to the current specific pixel block may be selected.

Then, instead of including representations of weights for that pixel block, only an index indicating which predefined ANN to use is needed. Hence in the example case of 16 ANNs (requiring 4 bits to index), the representation of each pixel block can be reduced to just 36 bits (two endpoint colours and the 4 bit index), whilst the case of 8 ANNs (requiring 3 bits to index) only requires 35 bits in total.

In this case, again the BC1 endpoint colours may be assumed, and optionally one or more additional global or per-texture colours. Optionally, a companion 'encoder' ANN may be used to find endpoint colours that reduce the image error for the selected N^{th} ANN, given that is it not fine-tuned to the specific pixel block.

In another variant embodiment, for any of the above schemes the ANN comprises 16 input nodes, one for each of the 4x4 pixels. In this case, the coordinates of the pixel need not be input to the ANN. Instead, the spatial arrangement of the pixels is embodied in structure and trained weights of the ANN itself rather than being provided as input and interpreted internally by the ANN when generating an output. In this case, the output itself may still be one or two ratio/proportion values.

Again as before multiple parent ANNs may be generated for example for similar texture types. This will tend to result in ANNs that characterise certain underlying patterns within the 4x4 pixel blocks. Again there may be a subset of weights that are further trainable on a per pixel block basis, with the weights or a 'quantisation' thereof being included in the encoding, or the ANNs may be fixed and only an index is used as described in the variant embodiment above.

It will be appreciated that if different sizes of pixel block are used then a different number of input nodes may be appropriate.

In the case that a set of N ANNs (for example 8, 16, 32, or 62) are pre-trained as described above, optionally - because they are so small - they can be baked directly into decoder shader instructions for decoding the endpoint-colour-plus-index representation of the pixel block discussed above. Meanwhile for the per pixel block case where weight data is provided instead of an index, then the weight data can be used by or transferred into the shader very quickly due to its small size.

It will be appreciated that both an index and weight scheme can be used together; as noted previously herein, the weights may only be a trainable subset of a larger ANN. It will be appreciated that there may be (for example 8, 16, 32, or 62) such ANNs, for example each trained on respective sets of similar blocks, as parent ANNs, and then a trainable subset of weights within a selected one of those ANNs can be trained for a specific pixel block; then the block is represented (in addition to endpoint colour data) by both an index identifying the parent ANN and weight data specifying how this has been fine-tuned to the specific pixel block.

Finally, optionally where indexed ANNs are used, they learn respective pixel block patterns; however to provide further variability they may also be provided with supplementary pattern data relating to the texture in a pixel block; for example a 2x2 array of data, indicating a gradient to the pixel colour data that can interact with the internal representation of the ANN to influence the output. As non-limiting examples:

| | |
|---|---|
| + | + |
| 0 | 0 |

### A gentle downward gradient

| | |
|---|---|
| + | + |
| - | - |

### A steep downward gradient

| | |
|---|---|
| + | 0 |
| 0 | - |

### A steep diagonal gradient

This may require, for example, an additional 8 or 12 bits. However given that when only using an index the representation of the pattern is otherwise only 3-6 bits in addition to the endpoint colour, such additional bits still mean the representation is smaller than BC1 - and indeed could occupy in the order of 24 bits before being of equal size.

It will also be appreciated that a number of preselected supplementary patterns could themselves be indicated using an index.

Hence more generally a pixel block can be represented using endpoint colour data together with one or more of weight data, an ANN index value, and supplementary pattern data (either directly or as an index), to provide a better mix of endpoint colours (and optionally default base colour(s)) within a representation of the pixel block that is the same size or smaller than BC1.

It will be appreciated that whilst BC1 itself is a relatively poor lossy encoding scheme, it is in effect an industry standard because it allows textures to remain compressed right up until the moment of use in the shader, and decompression can occur cheaply when a shader needs to access some pixels of that texture. This is very helpful for managing memory bandwidth and cache utilisation in a graphics pipeline.

Consequently being able to improve the encoding quality in a scheme that is equally compact, and optionally can also bake the decoding process into the shaders (and in any event is also cheap to compute) so that it enjoys the same benefits and typically also the same footprint as BC1 is very useful.

Finally, it will be appreciated that if image quality is more important than size, the number of bits allocated to any of the representational elements mentioned above can be increased to improve quality whilst only making the representation marginally larger.

Turning now to figure 6, in a summary embodiment of the present description, in a summary embodiment of the present description, a method of representing a current block of pixels, comprises the following steps.

In a first step s610, obtaining one or more 'endpoint' colours for the current block of pixels; this may be based for example on previous endpoint colour selection methods, iterating from these based on results of the used ANN, or based on parallel training of an encoder ANN that determines the or each end point colour and the at least the used decoder ANN that generates pixel colour data (e.g. either just that ANN, or as one of a suite of M ANNs), as described elsewhere herein.

In a second step s620, selecting data indicative of a decoder ANN used to indicate pattern data for the current block of pixels as respective proportions for two or more colours including the or each obtained endpoint colour; this indicative data may comprise weight data or selected bits from weight data, and/or indices of pre-existing ANNs, as described elsewhere herein.

In a third step s630, representing the current block of pixels with a combination of the or each endpoint colour and the selected data indicative of the used decoder ANN, as described elsewhere herein.

It will be apparent to a person skilled in the art that variations in the above method corresponding to operation of the various embodiments of the apparatus as described and claimed herein are considered within the scope of the present invention, including but not limited to that:
- The or each endpoint colour is derived by an encoder ANN, trained in conjunction with at least the used decoder ANN, using a loss function related to the difference between pixel colour values output by the used decoder ANN and the ground truth pixel colour values of the current block of pixel, as described elsewhere herein;
- the selected data indicative of a used ANN comprises an index value indicating one of M available ANNs, as described elsewhere herein;
   - in this instance, optionally the M available ANNs were trained in parallel with an encoder ANN trained to output the or each endpoint colour, as described elsewhere herein;
      - in this case, further optionally the encoder ANN is also trained to select which one of the M available ANNs to include as an index, as described elsewhere herein;
   - in this instance, optionally the M available ANNs were each trained on a respective one of M sets of blocks of pixels, the sets defined based on similarity of the blocks of pixels so that each ANN is trained of a different set of pixel blocks that are similar within the respective set, as described elsewhere herein;
- the selected data indicative of a used ANN comprises data indicative of weight values of the ANN, as described elsewhere herein;
   - in this instance, optionally the data indicative of weight values are for a subset of weights that were trained using the current block of pixels in an otherwise fixed ANN, as described elsewhere herein;
   - similarly in this instance, optionally the data indicative of weight values defines one selected from the list consisting of the respective values of weights trained using the current block of pixels, and a subset of bits within the bit representation of values of weights trained using the current block of pixels, the weights having default values prior to training on the current block of pixels and the subset of bits modifying the default values to approximate the trained values, as described elsewhere herein;
- the selected ANN indicates respective proportions for two or more colours including at least a first predefined colour not included as an endpoint colour in the representation of the current block of pixels, as described elsewhere herein;
- the representation of the current block of pixels also comprises supplementary pattern data for input to the used ANN, as described elsewhere herein;
- different ANNs are selected for different sizes of pixel blocks, as described elsewhere herein;
   and
- the number of bits used for representing the current block of pixels is made the same or fewer than the number of bits used in a so-called 'BC1' representation of the same current pixel block, as described elsewhere herein.

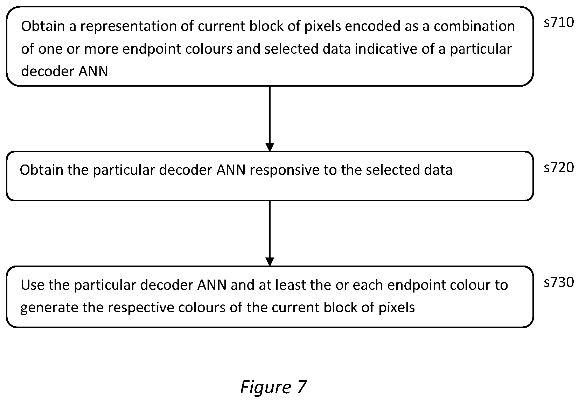

Similarly, and referring now to Figure 7, in a summary embodiment of the present description a method of obtaining pixel colours for an encoded block of pixels, the method comprising:
In a first step s710, obtaining a representation of current block of pixels encoded as a combination of one or more endpoint colours and selected data indicative of a particular decoder ANN; this may for example comprise receiving the representation as part of a download or stream from a remote server, and/or retrieving the representation from RAM or GPU memory at runtime, as described elsewhere herein.

Wherein the particular decoder ANN was trained to output blending proportion data indicating respective colours of the current block of pixels as a proportionate blend of colours comprising at least the or each endpoint colour (e.g. trained either specifically for the current block of pixels, or trained on a set of similar blocks, or trained in parallel with an encoder to become representative of blocks similar to the current block and so selected by the encoder ANN), as described elsewhere herein.

In a second step s720, obtaining the particular decoder ANN responsive to the selected data; this may for example comprise supplying or updating a subset of weights to an otherwise fixed ANN based on the selected data to obtain a version of the decoder ANN as specified by that selected data, and/or choosing one of M existing decoder ANNs based on the selected data, as described elsewhere herein.

In a third step s730, using the particular decoder ANN and at least the or each endpoint colour to generate the respective colours of the current block of pixels, as described elsewhere herein.

It will be appreciated that the above methods may be carried out on hardware suitably adapted as applicable by software instruction or by the inclusion or substitution of dedicated hardware.

Thus the required adaptation to existing parts of an equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, and referring again to Figure 1, in a summary embodiment of the present description an encoder device (for example entertainment device 10 operating either as a client or a server, or a component thereof), comprises the following.

A memory for example RAM 40 or memory of GPU 30) configured (for example by suitable software instruction) to store pixel data for a block of pixels, as described elsewhere herein;

An encoding processor (for example CPU 20, GPU 30, or a combination thereof), configured (for example by suitable software instruction) to:
obtain one or more 'endpoint' colours for a current block of pixels, as described elsewhere herein; and
select data indicative of a decoder ANN used to indicate colour data for the current block of pixels by indicating respective proportions for two or more colours including the or each obtained endpoint colour, as described elsewhere herein; and
An output processor (for example CPU 20, GPU 30, or a combination thereof), configured (for example by suitable software instruction) to output a representation of the current block of pixels that comprises a combination of the or each endpoint colour and the selected data indicative of the used decoder ANN, as described elsewhere herein.

Instances of this summary embodiment implementing the methods and techniques described herein (for example by use of suitable software instruction) are envisaged within the scope of the application.

Similarly, and referring again to Figure 1, in a summary embodiment of the present description, a decoder device (for example entertainment device 10 operating either as a client or a server, or a component thereof), comprises the following.
a receiver configured (for example by suitable software instruction) to obtain a representation of current block of pixels encoded as a combination of one or more endpoint colours and selected data indicative of a particular decoder ANN, as described elsewhere herein; for example for externally received representations, the receiver may comprise data point 60 operating in conjunction with CPU 20, whereas in the case of internally received representations, which may come for example from SSD 50, optical drive 70, or RAM 40, the receiver may for example by the GPU optionally operating in conjunction with the CPU.

Wherein the particular decoder ANN was trained to output blending proportion data indicating respective colours of the current block of pixels as a proportionate blend of colours comprising at least the or each endpoint colour (e.g. again trained either specifically for the current block of pixels, or trained on a set of similar blocks, or trained in parallel with an encoder to become representative of blocks similar to the current block and so selected by the encoder ANN), as described elsewhere herein.

A decoding processor configured (for example by suitable software instruction) to obtain the particular decoder ANN responsive to the selected data, as described elsewhere herein; and the decoding processor is configured (again for example by suitable software instruction) to use the particular decoder ANN and at least the or each endpoint colour to generate the respective colours of the current block of pixels, as described elsewhere herein.

Again, instances of this summary embodiment implementing the methods and techniques described herein (for example by use of suitable software instruction) are envisaged within the scope of the application.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

### EMBODIMENTS

Although the present invention is defined in the claims, it should be understood that the present invention can also (alternatively) be defined in accordance with the following embodiments:
1. A method of representing a current block of pixels, comprising:
   obtaining one or more 'endpoint' colours for the current block of pixels;
   selecting data indicative of a decoder artificial neural network 'ANN' used to indicate pattern data for the current block of pixels as respective proportions for two or more colours including the or each obtained endpoint colour; and
   representing the current block of pixels with a combination of the or each endpoint colour and the selected data indicative of the used decoder ANN.
2. The method of any preceding embodiment, in which the or each endpoint colour is derived by an encoder ANN, trained in conjunction with at least the used decoder ANN, using a loss function related to the difference between pixel colour values output by the used decoder ANN and the ground truth pixel colour values of the current block of pixels.
3. The method of embodiment 1 or embodiment 2, in which the selected data indicative of a used decoder ANN comprises an index value indicating one of M available ANNs.
4. The method of embodiment 3, in which the M available ANNs were trained in parallel with an encoder ANN trained to output the or each endpoint colour.
5. The method of embodiment 4, in which the encoder ANN is also trained to select which one of the M available ANNs to include as an index.
6. The method of embodiment 3, in which the M available ANNs were each trained on a respective one of M sets of blocks of pixels, the sets defined based on similarity of the blocks of pixels so that each ANN is trained of a different set of pixel blocks that are similar within the respective set.
7. The method of any preceding embodiment, in which the selected data indicative of a used ANN comprises data indicative of weight values of the ANN.
8. The method of embodiment 7, in which the data indicative of weight values are for a subset of weights that were trained using the current block of pixels in an otherwise fixed ANN.
9. The method of embodiment 7 or embodiment 8, in which the data indicative of weight values defines one selected from the list consisting of:
   i. the respective values of weights trained using the current block of pixels; and
   ii. a subset of bits within the bit representation of values of weights trained using the current block of pixels, the weights having default values prior to training on the current block of pixels and the subset of bits modifying the default values to approximate the trained values.
10. The method of any preceding embodiment, in which the selected ANN indicates respective proportions for two or more colours including at least a first predefined colour not included as an endpoint colour in the representation of the current block of pixels.
11. The method of any preceding embodiment, in which the representation of the current block of pixels also comprises supplementary pattern data for input to the used ANN.
12. The method of any preceding embodiment, in which different ANNs are selected for different sizes of pixel blocks.
13. The method of any preceding embodiment in which the number of bits used for representing the current block of pixels is made the same or fewer than the number of bits used in a so-called 'BC1' representation of the same current pixel block.
14. A method of obtaining pixel colours for an encoded block of pixels, the method comprising:
   obtaining a representation of current block of pixels encoded as a combination of one or more endpoint colours and selected data indicative of a particular decoder ANN;
      wherein the particular decoder ANN was trained to output blending proportion data indicating respective colours of the current block of pixels as a proportionate blend of colours comprising at least the or each endpoint colour;
   obtaining the particular decoder ANN responsive to the selected data; and
   using the particular decoder ANN and at least the or each endpoint colour to generate the respective colours of the current block of pixels.
15. A computer program comprising computer executable instructions adapted to cause a computer system to perform the method of any one of the preceding embodiments.
16. An encoder device, comprising:
   a memory configured to store pixel data for a block of pixels;
   an encoding processor, configured to:
      obtain one or more 'endpoint' colours for a current block of pixels; and
      select data indicative of a decoder artificial neural network 'ANN' used to indicate colour data for the current block of pixels by indicating respective proportions for two or more colours including the or each obtained endpoint colour; and
   an output processor, configured to output a representation of the current block of pixels that comprises a combination of the or each endpoint colour and the selected data indicative of the used decoder ANN.
17. A decoder device, comprising:
   a receiver configured to obtain a representation of current block of pixels encoded as a combination of one or more endpoint colours and selected data indicative of a particular decoder ANN;
      wherein the particular decoder ANN was trained to output blending proportion data indicating respective colours of the current block of pixels as a proportionate blend of colours comprising at least the or each endpoint colour;
   a decoding processor configured to obtain the particular decoder ANN responsive to the selected data; and
   the decoding processor is configured to use the particular decoder ANN and at least the or each endpoint colour to generate the respective colours of the current block of pixels.

## Claims

1. A computer-implemented method for representing a current block of pixels, the method comprising:
obtaining (s610) one or more endpoint colours for the current block of pixels;
selecting (s620) data indicative of a decoder artificial neural network, ANN, used to indicate pattern data for the current block of pixels as respective proportions for two or more colours including each endpoint colour; and
representing (s630) the current block of pixels with a combination of each endpoint colour and the selected data indicative of the decoder ANN.

2. The method of claim 1, wherein each endpoint colour is derived by an encoder ANN, trained in conjunction with at least the decoder ANN, using a loss function related to a difference between pixel colour values output by the decoder ANN and ground truth pixel colour values of the current block of pixels.

3. The method of claim 1 or claim 2, wherein the data indicative of the decoder ANN comprises an index value indicating one of M available ANNs.

4. The method of claim 3, wherein the M available ANNs were trained in parallel with an encoder ANN trained to output each endpoint colour, optionally wherein the encoder ANN is also trained to select which one of the M available ANNs to include as an index.

5. The method of claim 3, wherein the M available ANNs were each trained on a respective one of M sets of blocks of pixels, the sets defined based on similarity of the blocks of pixels so that each ANN is trained on a different set of pixel blocks that are similar within the respective set.

6. The method of any one of the preceding claims, wherein the data indicative of the decoder ANN comprises data indicative of weight values of the decoder ANN, optionally wherein the data indicative of the weight values are for a subset of weights that were trained using the current block of pixels in an otherwise fixed ANN.

7. The method of claim 6, wherein the data indicative of the weight values defines one selected from the list consisting of:
i. respective values of weights trained using the current block of pixels; and
ii. a subset of bits within a bit representation of the values of the weights trained using the current block of pixels, the weights having default values prior to training on the current block of pixels and the subset of bits modifying the default values to approximate the trained values.

8. The method of any one of the preceding claims, wherein the data indicative of the decoder ANN indicates respective proportions for two or more colours including at least a first predefined colour not included as an endpoint colour in the representation of the current block of pixels.

9. The method of any one of the preceding claims, wherein the representation of the current block of pixels further comprises supplementary pattern data for input to the decoder ANN.

10. The method of any one of the preceding claims, wherein different ANNs are selected for different sizes of pixel blocks.

11. The method of any one of the preceding claims, wherein the number of bits used for representing the current block of pixels is the same or fewer than the number of bits used in a BC1 representation of the same current pixel block.

12. A computer-implemented method for generating pixel colours for an encoded block of pixels, the method comprising:
obtaining (s710) a representation of a current block of pixels encoded as a combination of one or more endpoint colours and selected data indicative of a particular decoder ANN, wherein the particular decoder ANN was trained to output blending proportion data indicating respective colours of the current block of pixels as a proportionate blend of colours comprising at least each endpoint colour;
obtaining (s720) the particular decoder ANN responsive to the selected data; and
using (s730) the particular decoder ANN and at least each endpoint colour to generate the respective colours of the current block of pixels.

13. A computer program comprising computer executable instructions adapted to cause a computer system to perform the method of any one of the preceding claims.

14. An encoder device comprising:
a memory configured to store pixel data for a block of pixels;
an encoding processor; and
an output processor, wherein the encoder device is configured to perform the method of any one of claims 1 to 11.

15. A decoder device comprising:
a receiver configured to obtain (s710) a representation of a current block of pixels encoded as a combination of one or more endpoint colours and selected data indicative of a particular decoder ANN, wherein the particular decoder ANN was trained to output blending proportion data indicating respective colours of the current block of pixels as a proportionate blend of colours comprising at least each endpoint colour;
a decoding processor configured to:
obtain (s720) the particular decoder ANN responsive to the selected data; and
use (s730) the particular decoder ANN and at least each endpoint colour to generate the respective colours of the current block of pixels.
